# EUROPÄISCHE PATENTANMELDUNG

(11) **EP 3 960 342 A1**
(43) Veröffentlichungstag der Anmeldung: **02.03.2022**
(21) Anmeldenummer: 20192833.0
(22) Anmeldetag: 26.08.2020
(51) Int. Cl.: B23B 51/04, B23B 31/11, B23B 31/06

(54) **VERFAHREN ZUM LÖSEN EINER SCHRAUBVERBINDUNG ZWISCHEN EINEM KERNBOHRGERÄT UND EINER BOHRKRONE UND KERNBOHRGERÄT**

(71) Anmelder: Hilti Aktiengesellschaft, 9494 Schaan (LI)
(72) Erfinder: Schaefer, Martin, 6858 Schwarzach (AT); Vida, Gabor, 7000 Chur (CH)
(74) Vertreter: Hilti Aktiengesellschaft Corporate Intellectual Property

(57) **Zusammenfassung**

Die vorliegende Erfindung betrifft ein Verfahren zum Lösen einer Schraubverbindung (6) zwischen einem Kernbohrgerät (1) und einer Bohrkrone (2), wobei das Lösen der Schraubverbindung durch ein Aufbringen von Drehmomentspitzen auf die Antriebswelle (3) des Kernbohrgeräts bewirkt wird, die zum Tragen kommen, wenn die Antriebswelle entgegen der eigentlichen Bohrrichtung des Kernbohrgeräts angetrieben wird. In einem zweiten Aspekt betrifft die Erfindung ein Kernbohrgerät, mit dem das vorgeschlagene Verfahren durchgeführt werden kann. In einem weiteren Aspekt betrifft die Erfindung ein Verfahren zur Steuerung des Kernbohrgeräts, bei dem die Umkehr einer Drehrichtung einer Antriebswelle des Kernbohrgeräts und ein Aufbringen von Drehmomentspitzen auf die Antriebswelle so miteinander kombiniert werden, dass durch die Kombination von Drehrichtungsumkehr und Drehmomentspitzen eine Schraubverbindung zwischen Kernbohrgerät und einer Bohrkrone gelöst werden kann.

## Beschreibung

Die vorliegende Erfindung betrifft ein Verfahren zum Lösen einer Schraubverbindung zwischen einem Kernbohrgerät und einer Bohrkrone, wobei das Lösen der Schraubverbindung durch eine Vorsehung von Drehmomentspitzen an der Antriebswelle des Kernbohrgeräts bewirkt wird, die zum Tragen kommen, wenn die Antriebswelle entgegen der eigentlichen Bohrrichtung des Kernbohrgeräts angetrieben wird. In einem zweiten Aspekt betrifft die Erfindung ein Kernbohrgerät, mit dem das vorgeschlagene Verfahren durchgeführt werden kann. Dazu umfasst das Kernbohrgerät eine Antriebswelle mit Drehmomentspitzen, wobei die Antriebswelle in einer Bohrrichtung, sowie einer zweiten Drehrichtung, die der Bohrrichtung entgegengesetzt ist, angetrieben werden kann. In einem weiteren Aspekt betrifft die Erfindung ein Verfahren zur Steuerung eines Kernbohrgeräts, bei dem die Umkehr einer Drehrichtung einer Antriebswelle des Kernbohrgeräts und ein Aufbringen von Drehmomentspitzen auf die Antriebswelle so miteinander kombiniert werden, dass durch die Kombination von Drehrichtungsumkehr und Drehmomentspitzen eine Schraubverbindung zwischen Kernbohrgerät und einer Bohrkrone gelöst werden kann.

### Hintergrund der Erfindung:

Im Stand der Technik sind Kernbohrgeräte bekannt, mit denen im Wesentlichen zylinderförmige Bohrkerne aus zu bearbeitenden Untergründen, wie Mauerwerk, Kalksandstein oder Beton, herausgeschnitten werden können. In den im Wesentlichen zylinderförmigen Bohrlöchern können dann beispielsweise Leitungen oder Rohre verlegt oder eingesetzt werden. Die Kernbohrgeräte können mit Bohrkronen verbunden sein, wobei die Bohrkronen in den Untergrund hineingetrieben werden, um den Bohrkern herauszuschneiden.

Bei konventionellen Bohrsystemen aus Kernbohrgerät und Bohrkrone werden Schraubverbindungen verwendet, um die Bohrkrone an dem Kernbohrgerät zu befestigen. Durch die beim Bohren aufgebrachten großen Kräfte kann es vorkommen, dass eine solche Schraubverbindung unter Umständen nur sehr schwer zu lösen ist. Dies kann insbesondere dann der Fall sein, wenn zusätzlich Korrosion auftritt und die Bohrkrone für längere Zeit nicht von dem Kernbohrgerät getrennt wurde.

Im Stand der Technik sind im Wesentlichen drei Vorgehensweisen bekannt, um solche schwer lösbaren Verbindungen zwischen einem Kernbohrgerät und eine Bohrkrone zu lösen. Beispielsweise ist es im Stand der Technik bekannt, Hilfsmittel, wie Schraubenschlüssel mit langen Hebeln, zu verwenden, um die für die Trennung von Kernbohrgerät und Bohrkrone erforderlichen Kräfte zu erzeugen. Dabei wird je ein Schraubenschlüssel an dem Kernbohrgerät und an der Bohrkrone angesetzt, wobei die Hebelwirkung durch den zusätzlichen Einsatz von Rohren oder Stangen verbessert werden kann. Diese Vorgehensweise ist mit dem offensichtlichen Nachteil verbunden, dass die entsprechenden Hilfsmittel jeweils mitgeführt werden müssen und leicht verloren gehen können. Darüber hinaus ist es erforderlich, um dieses Vorgehen zu ermöglichen, Schlüsselflächen an dem Kernbohrgerät und an der Bohrkrone vorzusehen, an denen die Hilfsmittel angesetzt werden und angreifen können. Die Vorsehung solcher Schlüsselflächen führt aber nachteiligerweise häufig dazu, dass der Kernbohrgerät und die Bohrkrone größer und länger werden. Dies erhöht notwendigerweise die Herstellungskosten für die entsprechenden Geräte, sowie den Materialverbrauch. Außerdem sind die so mit Schlüsselflächen versehenen Kernbohrgeräte und Bohrkronen schwerer und dadurch schlechter handzuhaben und auszutauschen oder zu montieren.

Eine andere Möglichkeit, das Lösen einer Schraubverbindung zwischen Kernbohrgerät und Bohrkrone zu erleichtern, besteht in der Verwendung von sogenannten «Leichtlöseringen». Dabei handelt es sich um Kupfer- und/oder Gummischeiben, die zwischen Kernbohrgerät und Bohrkrone angebracht werden können. Solche Leichtlöseringe sind allerdings mit dem Nachteil verbunden, dass eine Steifigkeit des Bohrsystems aus Kernbohrgerät und Bohrkrone durch ihren Einsatz reduziert wird. Eine reduzierte Systemsteifigkeit kann aber zu Schwierigkeiten beim Anbohren, d.h. beim Start eines Bohrvorgangs, führen.

Eine dritte Möglichkeit, das Lösen einer Schraubverbindung zwischen Kernbohrgerät und Bohrkrone zu erleichtern, besteht in einem großzügigen Einsatz von Schmierstoff. Diese Methode ist aber wegen der offensichtlichen Nachteile, wie Materialverbrauch und Verschmutzungen, nicht geeignet, eine langfristige befriedigende technische Lösung für die Trennung der Bohrkrone von dem Kernbohrgerät darzustellen.

Die Aufgabe, die der vorliegenden Erfindung zugrunde liegt, besteht daher darin, die vorstehend beschriebenen Mängel und Nachteile des Standes der Technik zu überwinden und ein Verfahren und ein Kernbohrgerät bereitzustellen, die ein besonders einfaches Lösen von Kernbohrgerät und Bohrkrone ermöglichen. Die Lösung soll insbesondere einfach in der Handhabung sein und zu keinen zusätzlichen Verschmutzungen der Baustelle führen. Vor allem soll mit der Erfindung das Lösen der Bohrkrone von dem Kernbohrgerät ohne zusätzliche Hilfsmittel, wie Schraubenschlüssel und/oder Rohren, ermöglicht werden.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein Verfahren zum Lösen einer Schraubverbindung zwischen einem Kernbohrgerät und einer Bohrkrone vorgesehen, wobei das Verfahren die folgenden Verfahrensschritte umfasst:
a) Bereitstellung eines Kernbohrgeräts mit
   - einer Bohrkrone, die bei Betrieb des Kernbohrgeräts an dem Kernbohrgerät mittels einer Schraubverbindung befestigt vorliegt, und mit
   - einer Antriebswelle, auf die Drehmomentspitzen aufbringbar sind, wobei die Bohrkrone bei Betrieb des Kernbohrgeräts mittels der Antriebswelle des Kernbohrgeräts in einer Bohrrichtung angetrieben wird,
b) Betrieb des Kernbohrgeräts in einer zweiten Drehrichtung, wobei die zweite Drehrichtung der Bohrrichtung entgegengesetzt ist,
c) Lösen der Schraubverbindung zwischen einem Kernbohrgerät und eine Bohrkrone durch die Drehung der Antriebswelle in der zweiten Drehrichtung.

Die Grundidee der Erfindung beruht auf dem Zusammenspiel zwischen den Drehmomentspitzen und der geänderten Drehrichtung der Antriebswelle, wenn die Bohrkrone von dem Kernbohrgerät gelöst werden soll. Durch das Aufbringen der Drehmomentspitzen auf die Antriebswelle des Kernbohrgeräts und der Drehrichtungsänderung der Antriebswelle, die der eigentlichen Bohrrichtung des Kernbohrgeräts entgegengerichtet ist, kann eine Möglichkeit zur hilfsmittelfreien bzw. werkzeuglosen Trennung der Bohrkrone von dem Kernbohrgerät bereitgestellt werden. Mit anderen Worten stellt es einen wesentlichen Vorteil des vorgeschlagenen Verfahrens dar, dass ein Lösen der Schraubverbindung zwischen dem Kernbohrgerät und der Bohrkrone werkzeuglos erfolgt. Ferner kann bei dem vorgeschlagenen Trennungsverfahren auf einen übermäßigen Einsatz von Schmierstoff verzichtet werden, so dass das vorgeschlagene Verfahren einen Beitrag zum kosten- und materialsparenden Arbeiten auf der Baustelle leistet. Darüber hinaus werden unnötige Verschmutzungen durch den Schmierstoff vermieden, so dass umfangreiche Reinigungsarbeiten der Baustelle verhindert werden können.

Es ist im Sinne der Erfindung bevorzugt, dass es sich bei Drehmomentspitzen um kurzzeitig auftretende Drehmomentimpulse handelt, die im Vergleich zum sonst üblichen Drehmoment des Kernbohrgeräts deutlich erhöht sind. Insofern können die Begriffe «Drehmomentspitzen» und «Drehmomentimpulse» im Kontext der vorliegenden Erfindung synonym verwendet werden. Es ist im Sinne der Erfindung bevorzugt, dass das Aufbringen der Drehmomentspitzen durch das Kernbohrgerät erfolgt, wobei das Kernbohrgerät vorzugsweise einen Motor, eine Elektronik und/oder eine Steuereinheit umfassen kann, die dazu eingerichtet sind, sowohl die Drehrichtungsumkehr, als auch die Drehmomentimpulse zu veranlassen bzw. zu steuern. Es wird im Kontext der vorliegenden Erfindung somit auch ein Verfahren zur Steuerung eines Kernbohrgeräts offenbart, mit dem eine Umkehr einer Drehrichtung einer Antriebswelle und ein Aufbringen von Drehmomentspitzen auf eine Antriebswelle eines Kernbohrgeräts gesteuert werden können, wobei mit dem Steuerverfahren eine Schraubverbindung zwischen Kernbohrgerät und einer Bohrkrone gelöst werden kann. Das Steuerungsverfahren kann beispielsweise als Computer-Programmprodukt verwirklicht sein, das auf dem Kernbohrgerät betrieben werden kann. Im Kontext des Steuerungsverfahrens kann ein Kernbohrgerät zunächst in einer ersten Drehrichtung betrieben werden. Diese Drehrichtung stellt vorzugsweise die Bohrrichtung der Antriebswelle bzw. der Bohrkrone dar. Mit anderen Worten kann ein Bohrvorgang, mit dem ein Bohrkern aus einem Untergrund herausgeschnitten wird, mit dem Kernbohrgerät durchgeführt werden, wobei sich die Antriebswelle und die Bohrkrone während des Bohrvorgangs in Bohrrichtung drehen. Wenn die Bohrkrone von dem Kernbohrgerät getrennt werden soll, veranlasst das Kernbohrgerät, die Elektronik des Kernbohrgeräts und/oder seine Steuereinheit, dass die Drehrichtung der Antriebswelle bzw. der Bohrkrone von einer ersten Drehrichtung in eine zweite Drehrichtung geändert wird. Diese Änderung der Drehrichtung wird im Sinne der Erfindung als «Drehrichtungsumkehr» bezeichnet. Sie wird erfindungsgemäß mit Drehspitzen kombiniert, d.h. zusätzlich zu der Drehrichtungsumkehr werden Drehmomentspitzen auf die Antriebswelle des Kernbohrgeräts aufgebracht. Dies bedeutet im Sinne der Erfindung bevorzugt, dass die Antriebswelle mit Drehmomentimpulsen beaufschlagt wird, während sich die Antriebswelle mit einer zweiten Drehrichtung dreht. Durch diese Kombination von Drehmomentspitzen und Rotation der Antriebswelle in einer zweiten Drehrichtung, die der Bohrrichtung des Kernbohrgeräts entgegengesetzt ist, wird vorteilhafterweise das erfindungsgemäße Ziel der Trennung von Bohrkrone und Kernbohrgerät erreicht.

Bei dem vorgeschlagenen Steuerungsverfahren werden eine Umkehr einer Drehrichtung einer Antriebswelle des Kernbohrgeräts und ein Aufbringen von Drehmomentspitzen auf die Antriebswelle so miteinander kombiniert, dass durch die Kombination von Drehrichtungsumkehr und Drehmomentspitzen eine Schraubverbindung zwischen Kernbohrgerät und einer Bohrkrone gelöst werden kann. Es ist im Sinne der Erfindung bevorzugt, dass die Antriebswelle des Kernbohrgeräts während eines Betriebs des Kernbohrgeräts in einer zweiten Drehrichtung mit Drehmomentspitzen beaufschlagt wird, so dass durch die Kombination von Drehrichtungsumkehr und Beaufschlagung der Antriebswelle mit Drehmomentspitzen eine Bohrkrone von dem Kernbohrgerät getrennt werden kann.

Es ist im Kontext der vorliegenden Erfindung vorgesehen, dass ein Kernbohrgerät mit einer Antriebswelle und einer Bohrkrone bereitgestellt wird. Die Antriebswelle ist vorzugsweise dazu eingerichtet, die Bohrkrone anzutreiben. Dies kann erfindungsgemäß in einer ersten Drehrichtung erfolgen, die im Sinne der Erfindung als "Bohrrichtung" bezeichnet wird. In den Figuren wird die Bohrrichtung mit dem Bezugszeichen "A" bezeichnet. Die Bohrrichtung ist diejenige Drehrichtung der Antriebswelle, in der ein Bohrkern aus einem Untergrund herausgeschnitten wird. Sie kann vorzugsweise auch als Arbeits- oder Betriebsrichtung des Kernbohrgeräts bezeichnet werden. Es ist im Sinne der Erfindung bevorzugt, dass ein Betrieb des Kernbohrgeräts in Bohrrichtung dazu verwendet werden kann, bei der Montage der Bohrkrone zu unterstützen. Beispielsweise kann die Drehung der Antriebswelle des Kernbohrgeräts "in Bohrrichtung" dazu verwendet werden, die aufgesetzte Bohrkrone festzuziehen und so die Schraubverbindung zwischen Kernbohrgerät und Bohrkrone zu stärken.

Ein wesentliches Merkmal der vorliegenden Erfindung ist es, dass das im Kontext der vorliegenden Erfindung vorgeschlagene Kernbohrgerät in der Lage ist, die Bohrkrone neben der Bohrrichtung in einer zweiten Drehrichtung anzutreiben, wobei diese zweite Drehrichtung der ersten Drehrichtung entgegengesetzt ist. In den Figuren wird die zweite Drehrichtung mit dem Bezugszeichen "B" bezeichnet. Mit anderen Worten ist es im Sinne der Erfindung bevorzugt, dass das Kernbohrgerät bzw. seine Antriebswelle dazu eingerichtet ist, die Bohrkrone in einer Bohrrichtung und in einer der Bohrrichtung entgegengesetzten Drehrichtung anzutreiben. Diese zweite Drehrichtung wird im Kontext der Erfindung eingesetzt, um die Bohrkrone von dem Kernbohrgerät zu lösen. Die Drehrichtungsumkehr wird im Sinne der Erfindung als Betrieb des Kernbohrgeräts «entgegen der Bohrrichtung» oder «in der zweiten Drehrichtung» bezeichnet, wobei damit ein Betrieb des Kernbohrgeräts gemeint ist, bei dem die Antriebswelle des Kernbohrgeräts entgegen der Bohrrichtung angetrieben wird. Vorzugsweise werden die Formulierungen «entgegen der Bohrrichtung» und «in der zweiten Drehrichtung» im Sinne der Erfindung synonym verwendet.

Es ist im Sinne der Erfindung somit bevorzugt, dass eine Drehrichtung der Antriebswelle bzw. der Bohrkrone des Kernbohrgeräts geändert wird, wenn die Bohrkrone von dem Kernbohrgerät getrennt werden soll. Eine Änderung der Drehrichtung bedeutet im Sinne der Erfindung bevorzugt, dass eine Drehrichtung des Kernbohrgeräts von einer ersten Drehrichtung in eine zweite Drehrichtung erfolgt, d.h. dass sich die Antriebswelle bzw. die Bohrkrone nicht mehr in einer Bohrrichtung, sondern in einer der Bohrrichtung entgegengesetzten Drehrichtung dreht. Durch diese Drehrichtungsumkehr kann ein Lösen bzw. Losschrauben der Bohrkrone von dem Kernbohrgerät bewirkt bzw. erleichtert werden.

Es ist im Kontext der vorliegenden Erfindung ferner vorgesehen, dass auf die Antriebswelle des Kernbohrgeräts Drehmomentspitzen aufgebracht werden, mit deren Hilfe die Schraubverbindung zwischen Bohrkrone und Kernbohrgerät gelöst werden kann. Es ist im Sinne der Erfindung insbesondere bevorzugt, dass die Masseträgheit der Bohrkrone zur Trennung der Bohrkrone von dem Kernbohrgerät beiträgt. Darüber hinaus kann eine Fixierung der Bohrkrone beim Lösen der Bohrkrone vom Kernbohrgerät helfen. Dabei wird die Bohrkrone so fixiert, dass sie sich bei Drehung der Antriebswelle nicht mitdreht.

Durch die Drehung der Antriebswelle entgegen der Bohrrichtung in Verbindung mit den Drehmomentspitzen, mit denen die Antriebswelle des Kernbohrgeräts beaufschlagt wird, kann insbesondere ein werkzeugloses und hilfsmittelfreies Lösen der Schraubverbindung zwischen Kernbohrgerät und Bohrkrone ermöglicht werden. Mit anderen Worten stellt die Erfindung eine technische Möglichkeit zur Trennung einer Schraubverbindung zwischen dem Kernbohrgerät und der Bohrkrone, das ohne zusätzliche Hilfsmittel oder Werkzeuge auskommt und auf einer Umkehr der Drehrichtung der Antriebswelle, sowie auf einer Beaufschlagung der Antriebswelle des Kernbohrgeräts mit Drehmomentspitzen beruht.

In einem weiteren Aspekt betrifft die Erfindung ein Kernbohrgerät, wobei das Kernbohrgerät dazu eingerichtet ist, das Verfahren nach einem der vorherigen Ansprüche durchzuführen. Die für das Trennungs-Verfahren eingeführten Begriffe, Definitionen und technischen Vorteile gelten vorzugsweise für das Kernbohrgerät analog. Mit dem vorgeschlagenen Kernbohrgerät kann eine technische Lösung bereitgestellt werden, die vorteilhafterweise ein werkzeugloses Lösen der Schraubverbindung zwischen Kernbohrgerät und Bohrkrone ermöglicht.

Das Kernbohrgerät wird vorzugsweise dadurch in die Lage versetzt, das vorgeschlagene Trennungs-Verfahren durchzuführen, indem es eine Bohrkrone und eine Antriebswelle umfasst, wobei auf die Antriebswelle Drehmomentspitzen aufgebracht werden können, die dazu eingerichtet sind, eine Schraubverbindung zwischen dem Kernbohrgerät und eine Bohrkrone zu lösen, wenn die Antriebswelle des Kernbohrgeräts entgegen der Bohrrichtung des Kernbohrgeräts angetrieben wird.

Es ist im Sinne der Erfindung bevorzugt, dass die Antriebswelle des Kernbohrgeräts dazu eingerichtet ist, in einer Bohrrichtung und in einer der Bohrrichtung entgegengesetzten Drehrichtung angetrieben zu werden. Vorzugsweise umfasst das Kernbohrgerät einen Motor zum Antrieb der Antriebswelle, wobei das Kernbohrgerät bzw. sein Motor vorzugsweise so ausgestaltet sind, dass ein Antrieb der Antriebswelle in zwei entgegengesetzte Drehrichtungen möglich ist. Es ist im Sinne der Erfindung ganz besonders bevorzugt, dass der Motor des Kernbohrgeräts dazu eingerichtet ist, Drehmomentspitzen zu erzeugen, deren Stärke ausreichend ist, um die Schraubverbindung zwischen dem Kernbohrgerät und der Bohrkrone zu lösen.

Es ist im Sinne der Erfindung bevorzugt, dass es sich bei dem Motor des Kernbohrgeräts um einen bürstenlosen Motor handelt, da bei der Verwendung von bürstenlosen Motoren die Durchführung einer Drehrichtungsumkehr wesentlich erleichtert ist.

Es ist im Sinne der Erfindung bevorzugt, dass das Kernbohrgerät ein Diamant-Kernbohrgerät ist und dass die Bohrkrone eine Diamant-Bohrkrone ist. Diamant-Bohrkronen können mit Diamanten besetzt sein, um ihre Schneidleistung gegenüber konventionellen Bohrkronen zu erhöhen. Diamant-Kernbohrgeräte sind vorzugsweise solche Kernbohrgeräte, die verwendet werden, um Diamant-Bohrkrone zu einer Rotationsbewegung anzutreiben, um das Herausscheiden der Bohrkerne aus dem Untergrund zu ermöglichen.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:

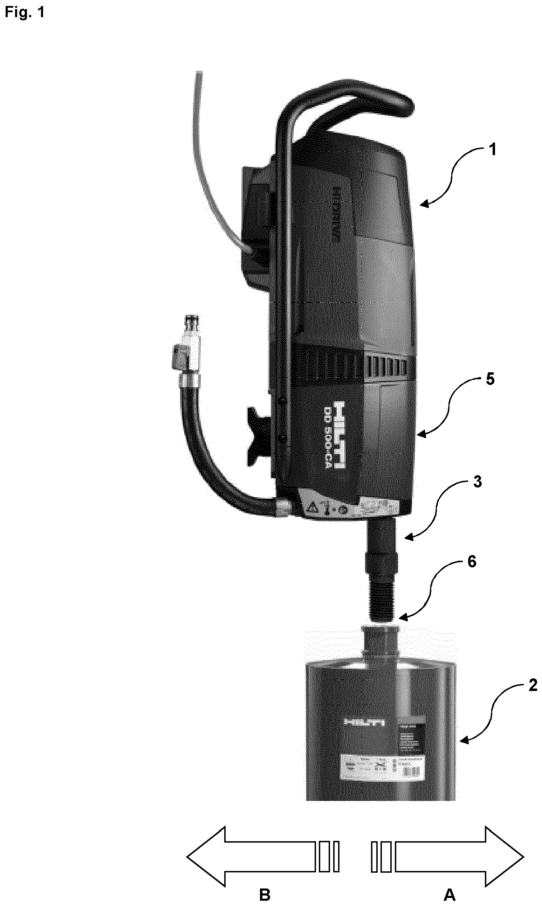

- Fig. 1: Ansicht einer bevorzugten Ausgestaltung der Erfindung

### Ausführungsbeispiele und Figurenbeschreibung:

Figur 1 zeigt ein vorgeschlagenes Kernbohrgerät 1, mit dem das vorgeschlagene Verfahren zur Trennung einer Bohrkrone 2 von einem Kernbohrgerät 1 durchgeführt werden kann. Das Kernbohrgerät 1 ist während seines Betriebs, d.h. wenn es zum Herausschneiden von Bohrkernen aus einem Untergrund eingesetzt wird, mit einer Bohrkrone 2 verbunden, wobei die Bohrkrone 2 in den Untergrund hineingetrieben wird, um den Bohrkern herauszuschneiden. Dazu wird die Bohrkrone 2 von einer Antriebswelle 3 des Kernbohrgeräts 1 zu einer Drehbewegung veranlasst, wobei die Antriebswelle 3 ihrerseits von einem Motor 5 des Kernbohrgeräts 1 angetrieben wird. Es ist vorgesehen, dass die Antriebswelle 3 bzw. die Bohrkrone 2 während eines Betriebs des Kernbohrgeräts 1, d.h. während eines Bohrvorgangs, in einer Bohrrichtung A betrieben wird. Das bedeutet im Sinne der Erfindung bevorzugt, dass sich die Bohrkrone 2 beispielsweise in einem Uhrzeigersinn dreht bzw. zu einer Rotation im Uhrzeigersinn angetrieben wird, wenn ein Bohrkern aus einem Untergrund herausgeschnitten werden soll. Die Verbindung zwischen dem Kernbohrgerät 1 und der Bohrkrone 2 wird insbesondere von einer Schraubverbindung 6 gebildet. Mögliche Beispiele für eine erste Drehrichtung A und eine zweite Drehrichtung B sind in der Fig. 1 schematisch mit Pfeilen angedeutet. In der realen Verwirklichung der Erfindung können die Drehrichtungen A, B selbstverständlich auch vertauscht sein.

Nach erfolgter Arbeit bzw. für einen Transport des Kernbohrgeräts 1 kann es erforderlich oder gewünscht sein, dass die Bohrkrone 2 von dem Kernbohrgerät 1 entfernt wird. Dazu sieht die vorliegende Erfindung vor, dass das Kernbohrgerät 1 in einer zweiten Drehrichtung B betrieben wird, die der Bohrrichtung A entgegengesetzt ist. Mit anderen Worten erfolgt, wenn die Bohrkrone 2 von dem Kernbohrgerät 1 getrennt werden soll, eine Drehrichtungsumkehr, indem die Drehrichtung des Kernbohrgeräts 1 geändert wird. Diese Änderung der Drehrichtung besteht vorzugsweise darin, dass die Drehrichtung des Kernbohrgeräts 1 von einer ersten Drehrichtung A in eine zweite Drehrichtung B umgeschaltet wird. In dem im vorhergehenden Absatz genannten Ausführungsbeispiel der Erfindung würde eine Drehrichtung entgegen dem Uhrzeigersinn der zweiten Drehrichtung B entsprechen, während eine Drehung im Uhrzeigersinn der Bohrrichtung A oder ersten Drehrichtung A entspricht.

Darüber hinaus ist vorgesehen, dass auf die Antriebswelle 3 des Kernbohrgeräts 1 Drehmomentspitzen 4 (nicht dargestellt) aufgebracht werden, mit denen die Schraubverbindung 6 zwischen Kernbohrgerät 1 und Bohrkrone 2 gelöst werden kann. Dazu wird insbesondere die Massenträgheit der Bohrkrone 2 ausgenutzt. Mit anderen Worten kann die Antriebswelle 3 des Kernbohrgeräts 1 mit Drehmomentspitzen 4 beaufschlagt werden, wobei die Drehmomentspitzen 6 eine solche Stärke aufweisen, dass mit ihnen die Bohrkrone 2 vom Kernbohrgerät 1 gelöst werden kann.

### Bezugszeichenliste

- 1: Kernbohrgerät
- 2: Bohrkrone
- 3: Antriebswelle
- 4: Drehmomentspitzen
- 5: Motor des Kernbohrgeräts
- 6: Schraubverbindung
- A: Bohrrichtung
- B: zweite Drehrichtung

## Patentansprüche

1. Verfahren zum Lösen einer Schraubverbindung (6) zwischen einem Kernbohrgerät (1) und einer Bohrkrone (2)
**gekennzeichnet durch die folgenden Verfahrensschritte:**
a) Bereitstellung eines Kernbohrgeräts (1) mit
- einer Bohrkrone (2), die bei Betrieb des Kernbohrgeräts (1) an dem Kernbohrgerät (1) mittels einer Schraubverbindung (6) befestigt vorliegt, und mit
- einer Antriebswelle (3), auf die Drehmomentspitzen (4) aufbringbar sind,
wobei die Bohrkrone (2) bei Betrieb des Kernbohrgeräts (1) mittels der Antriebswelle (3) des Kernbohrgeräts (1) in einer Bohrrichtung (A) angetrieben wird,
b) Betrieb des Kernbohrgeräts (1) in einer zweiten Drehrichtung (B), wobei die zweite Drehrichtung (B) der Bohrrichtung (A) entgegengesetzt ist,
c) Lösen der Schraubverbindung (6) zwischen einem Kernbohrgerät (1) und eine Bohrkrone (2) durch die Drehung der Antriebswelle (3) in der zweiten Drehrichtung (B).

2. Verfahren nach Anspruch 1,
**dadurch gekennzeichnet, dass**
ein Lösen der Schraubverbindung (6) zwischen dem Kernbohrgerät (1) und der Bohrkrone (2) werkzeuglos erfolgt.

3. Kernbohrgerät (1)
**dadurch gekennzeichnet, dass**
das Kernbohrgerät (1) dazu eingerichtet ist, das Verfahren nach einem der vorherigen Ansprüche durchzuführen.

4. Kernbohrgerät (1) nach Anspruch 3
**dadurch gekennzeichnet, dass**
das Kernbohrgerät (1) eine Bohrkrone (2) und eine Antriebswelle (3) umfasst, wobei auf die Antriebswelle (3) Drehmomentspitzen (4) aufbringbar sind, die dazu eingerichtet sind, eine Schraubverbindung (6) zwischen dem Kernbohrgerät (1) und der Bohrkrone (2) zu lösen, wenn die Antriebswelle (3) des Kernbohrgeräts (1) in einer zweiten Drehrichtung (B) angetrieben wird, wobei die zweite Drehrichtung (B) der Bohrrichtung (A) entgegengesetzt ist.

5. Kernbohrgerät (1) nach Anspruch 3 oder 4
**dadurch gekennzeichnet, dass**
die Antriebswelle (3) des Kernbohrgeräts (1) dazu eingerichtet ist, in einer Bohrrichtung (A) und in einer zweiten Drehrichtung (B) angetrieben zu werden, wobei die zweite Drehrichtung (B) der Bohrrichtung (A) entgegengesetzt ist.

6. Kernbohrgerät (1) nach einem der Ansprüche 3 bis 5
**dadurch gekennzeichnet, dass**
das Kernbohrgerät (1) einen Motor (5) zum Antrieb der Antriebswelle (3) umfasst, wobei der Motor (5) dazu eingerichtet ist, Drehmomentspitzen (4) zu erzeugen, deren Stärke ausreichend ist, um die Schraubverbindung (6) zwischen dem Kernbohrgerät (1) und der Bohrkrone (2) zu lösen.

7. Kernbohrgerät (1) nach einem der Ansprüche 3 bis 6
**dadurch gekennzeichnet, dass**
der Motor (5) des Kernbohrgeräts (1) ein bürstenloser Motor ist.

8. Kernbohrgerät (1) nach einem der Ansprüche 3 bis 7
**dadurch gekennzeichnet, dass**
das Kernbohrgerät (1) ein Diamant-Kernbohrgerät ist und dass die Bohrkrone (2) eine Diamant-Bohrkrone ist.

9. Verfahren zur Steuerung eines Kernbohrgeräts (1) nach einem der Ansprüche 3 bis 8
**dadurch gekennzeichnet, dass**
eine Umkehr einer Drehrichtung einer Antriebswelle (3) des Kernbohrgeräts (1) und ein Aufbringen von Drehmomentspitzen (4) auf die Antriebswelle (3) so miteinander kombiniert werden, dass durch die Kombination von Drehrichtungsumkehr und Drehmomentspitzen (4) eine Schraubverbindung (6) zwischen Kernbohrgerät (1) und einer Bohrkrone (2) gelöst wird.

10. Verfahren nach Anspruch 9
**dadurch gekennzeichnet, dass**
die Antriebswelle (3) des Kernbohrgeräts (1) während eines Betriebs des Kernbohrgeräts (1) in einer zweiten Drehrichtung (B) mit Drehmomentspitzen (4) beaufschlagt wird, so dass eine Schraubverbindung (6) zwischen Kernbohrgerät (1) und einer Bohrkrone (2) gelöst wird.

11. Verfahren nach Anspruch 9 oder 10
**dadurch gekennzeichnet, dass**
das Verfahren als Computer-Programmprodukt verwirklicht ist, wobei das Computer-Programmprodukt auf dem Kernbohrgerät (1) betreibbar ist.
